# EUROPÄISCHE PATENTSCHRIFT

(11) **EP 0 962 269 B1**
(45) Veröffentlichungstag und Bekanntmachung des Hinweises auf die Patenterteilung: **20.07.2005**
(21) Anmeldenummer: 99110451.4
(22) Anmeldetag: 29.05.1999
(51) Int. Cl.: B21D 53/12, B21D 28/10, B21D 35/00, B21D 22/06

(54) **Verfahren zur Herstellung von Bundlagern**
Method for making bearing collars
Procédé de fabrication de collerettes pour roulements

(30) Priorität: 03.06.1998 DE 19824741
(43) Veröffentlichungstag der Anmeldung: 08.12.1999
(73) Patentinhaber: Federal-Mogul Wiesbaden GmbH & Co.KG, 65201 Wiesbaden (DE)
(72) Erfinder: Aubele, Edwin, 65232 Taunusstein (DE)
(74) Vertreter: Fuchs Mehler Weiss & Fritzsche

(56) Entgegenhaltungen:
- EP-A- 0 888 833
- DE-A- 2 123 804
- DE-A- 2 419 332
- US-A- 1 868 655
- US-A- 2 119 900
- US-A- 2 989 936
- US-A- 3 820 369
- US-A- 5 247 825
- PATENT ABSTRACTS OF JAPAN vol. 010, no. 372 (M-544), 11. Dezember 1986 (1986-12-11) & JP 61 165239 A (TOYOTA MOTOR CORP), 25. Juli 1986 (1986-07-25)
- PATENT ABSTRACTS OF JAPAN vol. 009, no. 146 (M-389), 21. Juni 1985 (1985-06-21) & JP 60 024231 A (TOYOTA JIDOSHA KK), 6. Februar 1985 (1985-02-06)

## Beschreibung

Die Erfindung betrifft ein Verfahren zur Herstellung von Bundlagern, bei dem ein bandförmiges Trägermaterial mit Gleitschichtmaterial beschichtet wird, aus dem beschichteten Band Platinen gestanzt und die Platinen zu Bundlagern umgeformt und endbearbeitet werden.

Bei der Herstellung von Bundlagern ist eine Vielzahl von Bearbeitungsschritten notwendig. Nachdem das bandförmige Trägermaterial mit Gleitschichtmaterial beschichtet ist, werden zunächst Platinen aus dem Band ausgestanzt und anschließend Nuten in den Bereich eingebracht, wo der Bund umgeformt wird. Dies bedeutet, dass im Bereich der Nuten die Beschichtung geräumt werden muss. Im nächsten Fertigungsschritt wird der Bund hergestellt und danach wird die Lagerschale umgebogen, was in einer Rollmaschine durchgeführt wird. Die mit dem Bund versehene Platine wird in der Rollmaschine auf einer Rolle eingespannt und eine Gegenrolle führt die gewünschte Umformung durch.

Dieses Verfahren hat eine Reihe von Nachteilen. Die ausgestanzten Platinen müssen mittels entsprechender Vorrichtungen erfasst, gehalten und transportiert werden. Dies erfordert in den unterschiedlichen Bearbeitungsstationen entsprechende Halte- und Aufnahmeeinrichtungen, die umso komplizierter sind, je kleiner die Bundlager sind. Außerdem wird für die Handhabung der Platinen oder teilumgeformten Lager viel Zeit benötigt, so dass insgesamt nur geringe Taktzeiten erzielt werden können.

Ein weiterer Nachteil besteht darin, dass nur Bundlager mit maximalen Durchmessern bis 30 mm gefertigt werden können. Die Beschränkung der Rollenmaschinen liegt insbesondere in der Antriebstechnik, die wegen der erforderlichen hohen Kräfte für das Rollen der Bundlager nicht beliebig verkleinert werden kann. Bei der Herstellung von Bundlagern mit Durchmessern < 30 mm besteht die Gefahr, dass die für die Umformung vorgesehene Rolle unter Umständen brechen könnte.

Die US-A-2,989,936 beschreibt ein Verfahren zur Herstellung von Paaren zueinander gehörender Endringe und Endscheiben mit im wesentlichen gleichen Durchmessern für Gebläselaufräder. Dabei werden aus einem nicht beschichteten Metallblechstreifen Löcher ausgestanzt, zwischen denen Rohlinge stehen bleiben, welche durch an den Blechstreifenseiten ausgebildete, sich in Längsrichtung erstreckende Randstreifen miteinander verbunden bleiben. In mehreren aufeinanderfolgenden Umformschritten werden die Rohlinge in die Endringe bzw. die Endscheiben umgeformt, welche schließlich von den Randstreifen getrennt werden. Bei den Umformschritten reduzieren sich die Durchmesser der Löcher, und die Metallstreifenbreite verringert sich. Gleichzeitig verringert sich der Abstand zwischen benachbarten Löchern in Streifenlängsrichtung. Durch die Verringerung der Bandbreite und der Lochabstände während der Umformung wird es schwieriger, den Metallstreifen zu führen und die Schrittweite für die einzelnen Bearbeitungsschritte einzustellen, was erhöhte Anforderungen an die Konstruktion und Steuerung der Stanz- und Umformeinrichtung nach sich zieht.

Durch die JP-A-61 165239 wird ein automatisches Verfahren mit periodischem Vorschub eines Stangenmaterials zur Herstellung umgeformter Produkte beschrieben. In einem ersten Schritt werden in beide Seiten des Stangenmaterials in Längsrichtung hintereinanderliegende kurze und lange Löcher gebohrt, die zwischen einem mittleren Bereich und jeweils einem seitlichen Zufuhrstreifen des Stangenmaterials liegen. In die Verbindungsbrücken zwischen den kurzen und langen Löchern werden in einem zweiten Schritt drei längsverlaufende Schlitze eingearbeitet. Wenn in einem dritten Schritt die Verformung erfolgt, zieht sich das Stangenmaterial quer zur Förderrichtung zusammen. Dabei öffnen sich die Schlitze jeweils zu einer triangularen Form, mit einem W-förmigen Aufbau, so dass die Zufuhrstreifen in Längsrichtung wenig und in Querrichtung nicht deformiert werden. Durch das Auseinanderziehen der Schlitze in Querrichtung erfolgt zwangsläufig eine Verkürzung in Längsrichtung, was die bereits im Zusammenhang mit der US-A-2,989,936 diskutierten Nachteile mit sich bringt.

Aus der US-A-5,247,825 geht ein Verfahren zur Umformung eines Metallstreifens hervor, aus dem beispielsweise Lautsprechergitter gefertigt werden. Um bei einem Metallstreifen von geringer Dicke und mit geringer innerer Steifigkeit unerwünschte Rissbildungen und Deformationen zu vermeiden, werden zunächst längsverlaufende Versteifungsrippen im Randbereich des Metallstreifens eingeprägt, bevor aus dem Metallstreifen Ausnehmungen ausgestanzt und die Lautsprechergitter geprägt und von dem Metallstreifen getrennt werden. Die Herstellung von Versteifungsrippen ist jedoch bei der Herstellung von Bundlagern nicht erforderlich.

Aufgabe der Erfindung ist es, ein Verfahren bereitzustellen, das sich durch eine einfache Handhabung der Platinen und durch höhere Taktzeiten auszeichnet.

Diese Aufgabe wird mit einem Verfahren gelöst, das dadurch gekennzeichnet ist, dass die Platine unter Ausbildung von mindestens zwei Dehnungs- und Halteabschnitten ausgestanzt wird, über die die Platine während der Umformung mit dem Rand des Bandes verbunden bleibt, dass die Dehnungs- und Halteabschnitte jeweils einen in Querrichtung verlaufenden Steg und zwei in Querrichtung dehnbare Bügel aufweisen, und dass das Bundlager nach Beendigung der Umformung an den Dehnungs- und Halteabschnitten abgetrennt wird.

Der Vorteil dieses Verfahrens besteht darin, dass dadurch, dass die Platine nicht vollständig aus dem Band gestanzt wird, sondern mit dem Band bzw. der Nachbarplatine verbunden bleibt, das Band oder dieser Verbund als Transporthilfe für die Platinen genutzt werden kann. Das Band bzw. der Verbund aus mehreren hintereinander angeordneten zusammenhängenden Platinen lässt sich in den einzelnen Bearbeitungsstationen weitaus exakter bei deutlich geringerem Aufwand positionieren als dies bei Einzelplatinen der Fall ist. Insbesondere dann, wenn die Platinen während des Umformens mit dem Rand des Bandes verbunden bleiben, besteht der Vorteil darin, dass ein ebener Gegenstand in den Bearbeitungsstationen fixiert werden muss, was gegenüber einem bereits teilweise umgeformten Halbzeug weitaus einfacher zu realisieren ist. Diese Maßnahmen tragen dazu bei, dass erheblich kürzere Taktzeiten erzielt werden.

Damit die Umformung der Platine zu einem Bundlager trotz der Verbindung mit Nachbarplatinen bzw. mit dem Band nicht beeinträchtigt wird, sind die Dehnungsabschnitte entsprechend nachgiebig ausgebildet.

Gemäß einer Ausführungsform werden zwei Dehnungs- und Halteabschnitte jeweils seitlich im Bereich des späteren Scheitels des Bundlagers ausgestanzt. Die Dehnungs- und Halteabschnitte erstrecken sich somit in Querrichtung, d. h. senkrecht zur Vorschubrichtung des Bandes. Damit der Umformvorgang ermöglicht wird, sind diese Dehnungs- und Halteabschnitte in Querrichtung dehnbar ausgebildet. Andererseits muss eine Positionierungsgenauigkeit gewährleistet sein. Deshalb sind die Dehnungs- und Halteabschnitte in Bandlängsrichtung unnachgiebig ausgebildet, so dass während des Umformvorganges keine Relativverschiebung der Platinen bzw. der teil- oder ganz umgeformten Platinen in Längsrichtung verhindert wird.

Bei den Dehnungs- und Halteabschnitten, die jeweils einen in Querrichtung verlaufenden Steg und zwei in Querrichtung dehnbare Bügel aufweisen, ist eine symmetrische Anordnung der Bügel vorteilhaft, so dass nur eine Dehnung in Querrichtung, aber keine Verschiebung in Längsrichtung des Bandes auftreten kann. Die Dehnbarkeit wird dadurch erreicht, dass die Krümmung der Bügel veränderbar ist.

Um die Positionierung des Bandes zu erleichtern, werden im Randbereich des Bandes Positionierlöcher ausgestanzt. Pro Platine sind dies vorzugsweise jeweils zwei Löcher, die im Bereich des Randes in der Nähe der Halte- und Dehnungsabschnitte eingebracht werden. Die Umformung der Platine erfolgt vorzugsweise in einem Gesenk, so dass keine Einschränkung hinsichtlich des Durchmessers des Bundlagers gegeben ist. Vorteilhafterweise wird zunächst die Lagerschale geformt und anschließend der Rand der Lagerschale zum Bund umgebogen.

Die Vorrichtung zum Umformen von Platinen zu Bundlagem weist ein Gesenk und einen Formballen auf, die auf beiden Seiten jeweils einen zur Bundformung verschiebbaren Schieber aufweisen.

Die Platine wird in diese Vorrichtung eingeführt und durch Schließen von Gesenk und Formballen zur Lagerschale geformt, wobei die Platine über die Halte- und Dehnungsabschnitte gehalten wird. Nach diesem Formvorgang werden die seitlichen Schieber auf die durch Gesenk und Formballen gehaltene Platine verschoben, so dass der gegenüber Gesenk und Formballen vorstehende Rand der Platine insgesamt beigebogen wird.

Der Schieber weist vorzugsweise auf seiner dem Gesenk und dem Formballen abgewandten Seite eine Schräge auf, an der ein mit seiner Schräge sich in vertikaler Richtung bewegender Treibkeil angreift.

Das Gesenk ist über mindestens eine Feder an einer Kopfplatte befestigt, an der vorteilhafterweise auch die Treibkeile angeordnet sind. Durch das Absenken der Kopfplatte und während des Schließens des Gesenks werden auch die Treibkeile angetrieben und in Richtung auf Gesenk und Formballen bewegt.

Beispielhafte Ausführungsformen der Erfindung werden nachfolgend anhand der Zeichnungen näher erläutert:

### Es zeigen:

- Fig. 1: eine Draufsicht auf ein Band mit ausgestanzten und umgeformten Platinen in verschiedenen Bearbeitungsstufen,
- Fig. 2: eine Seitenansicht der teilweise und vollständig umgeformten Platinen,
- Fign. 3a,3b 4a,4b 5a,5b: jeweils zwei Seitenansichten einer Vorrichtung zum Umformen von Bundlagern in drei verschiedenen Bearbeitungsschritten.

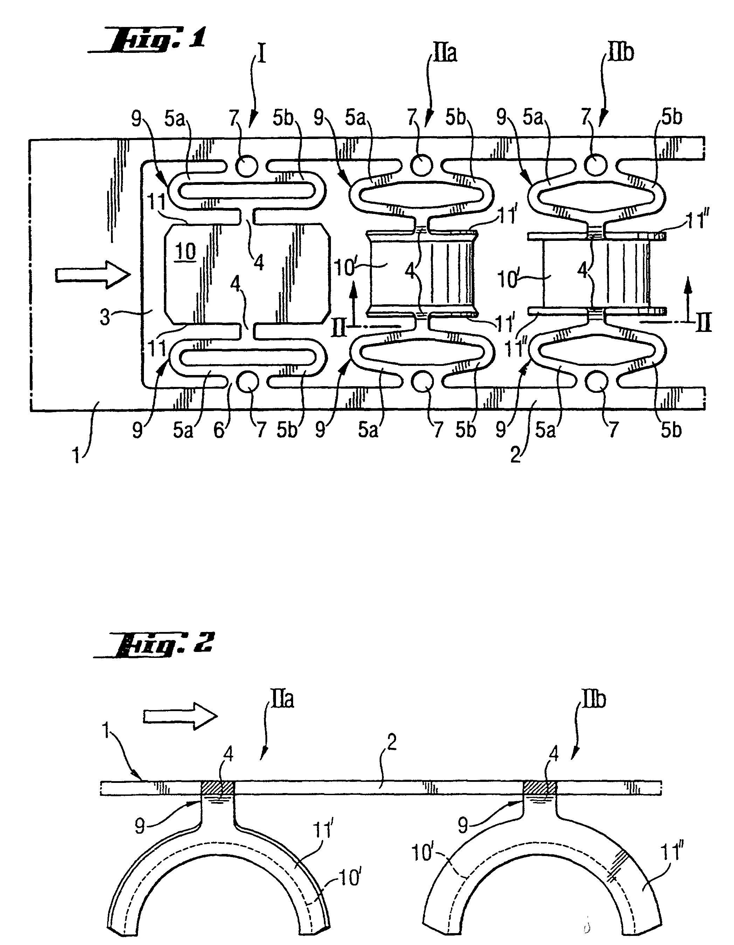

In der Fig. 1 ist die Draufsicht auf ein beschichtetes Band 1 dargestellt. Die Vorschubrichtung des Bandes 1 wird durch den Pfeil gekennzeichnet. In der Bearbeitungsstation I erfolgt die Ausstanzung der Platine 10, die mit dem Rand 2 des Bandes 1 über Dehnungs- und Halteabschnitte 9 verbunden bleibt.

In der hier gezeigten Ausführungsform sind an den beiden gegenüberliegenden Seiten der Platine 10 als Bestandteil der Dehnungs- und Halteabschnitte 9 mittig zwei Stege 4 vorgesehen, die in zwei Bügel 5a und 5b übergehen. Die Bügel sind in einem Übergangsabschnitt 6 zusammengeführt, der mit dem Rand 2 des Bandes 1 verbunden ist. Die Bügel 5a und 5b bilden eine symmetrische Anordnung und sind in Querrichtung dehnbar, in Längsrichtung des Bandes 1 jedoch unnachgiebig ausgebildet. Dadurch wird erreicht, dass ein ausreichender Bewegungsspielraum für die Umformung der Platine 10 zur Verfügung steht, wie dies in den weiteren Bearbeitungsschritten IIa und IIb dargestellt ist.

Die Krümmung der Bügel 5a und 5b wird während der Bearbeitungsschritte IIa und IIb vergrößert, weil sich durch die Umformung die Querabmessung der Platine 10 kontinuierlich verringert. Im Bearbeitungsschritt IIa ist die Lagerschale 10' bereits geformt, der Platinenrand 11 aber erst teilweise zum Bund 11' umgebogen. Im Bearbeitungsschritt IIb ist der teilweise umgebogene Bund 11' vollständig umgebogen und mit 11'' gekennzeichnet. Bei diesem Bearbeitungsschritt sind die Bügel 5a und 5b vollständig aufgebogen.

Im Bereich der Übergangsabschnitte 6 sind Positionierlöcher 7 ausgestanzt, in die entsprechende Positionierstifte in der Umformvorrichtung eingreifen und so eine exakte Positionierung der jeweils zu bearbeitenden Platine gewährleisten.

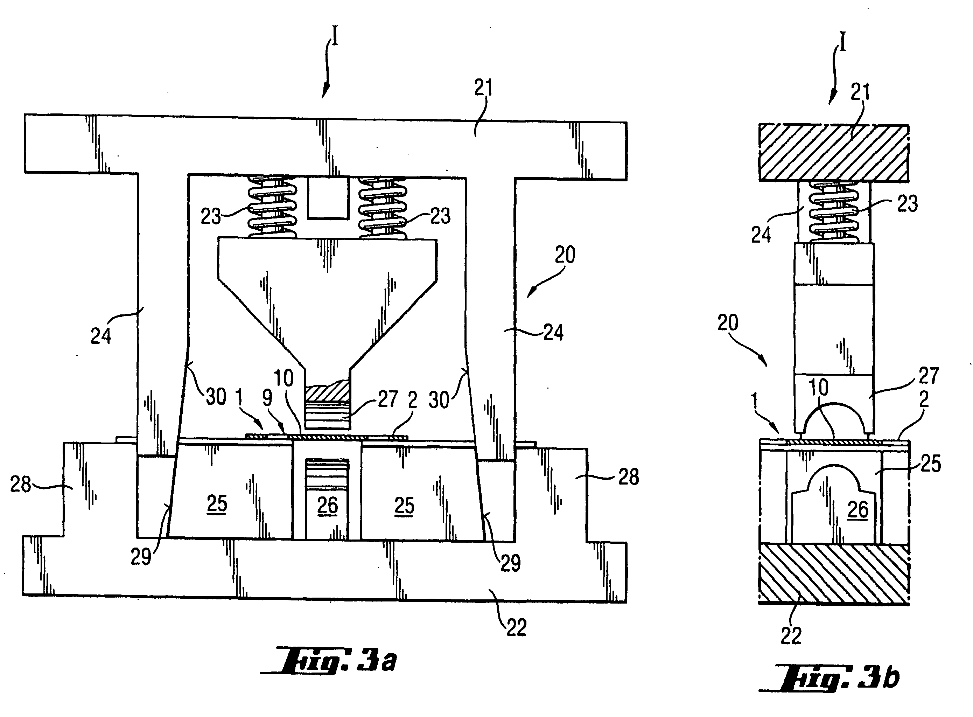

In der Fig. 2 ist eine Seitenansicht der Platinen nach den Bearbeitungsschritten IIa und IIb dargestellt. Es ist deutlich zu sehen, dass die Lagerschalen 10' über die Stege 4 im Scheitelbereich gehalten werden. In den Figuren 3 bis 5 ist eine Vorrichtung 20 zum Umformen von Bundlagem dargestellt. Kernstück ist ein Gesenk 27 mit einem Formballen 26, die die Form des herzustellenden Bundlagers aufweisen. Der Formballen 26 ist ortsfest angebracht, während das Gesenk 27 in vertikaler Richtung beweglich angeordnet ist. Hierzu ist eine Kopfplatte 21 vorgesehen, die an ihrer Unterseite zwei Federn 23 aufweist, die am Gesenk 27 befestigt sind.

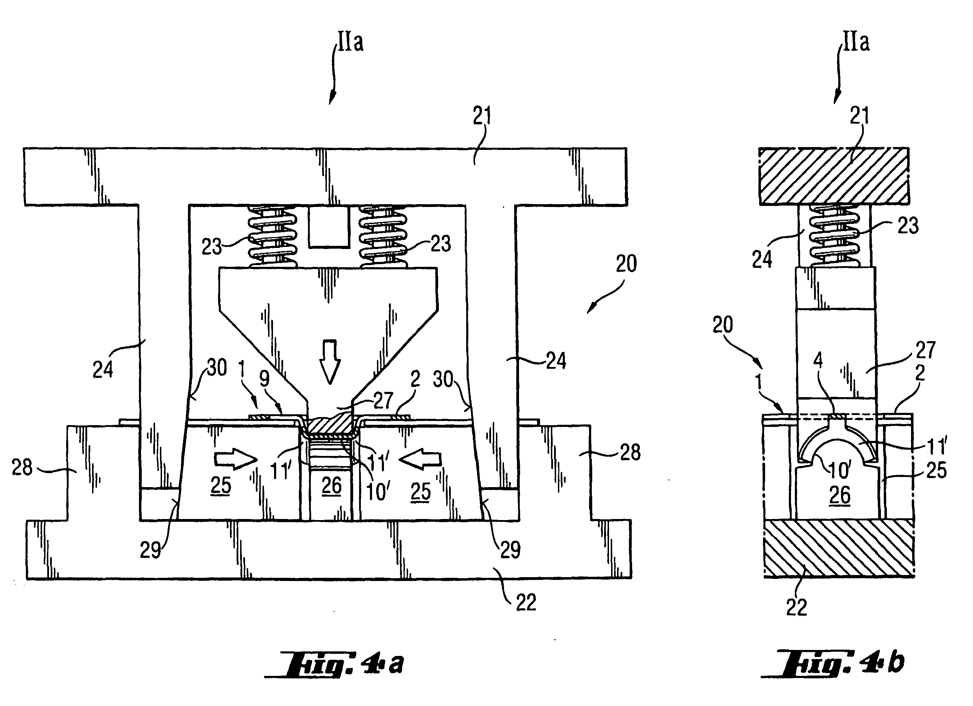

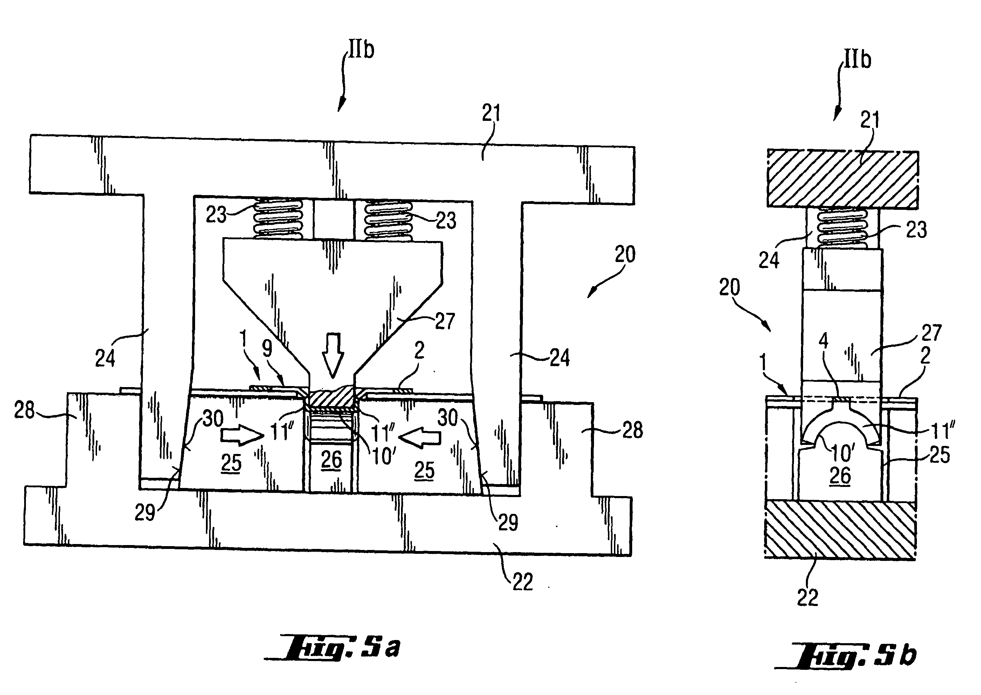

Ferner sind an der Kopfplatte 21 zwei Treibkeile 24 befestigt, die in ihrem unteren Endabschnitt jeweils eine Schräge 30 aufweisen. Diese Schrägen 30 greifen an entsprechenden Schrägen 29 von Schiebern 25 an, die seitlich neben dem Gesenk 27 bzw. dem Formballen 26 auf der Grundplatte 22 angeordnet sind. Wenn die Kopfplatte 21 abgesenkt wird, bewegen sich sowohl das Gesenk 27 als auch die Treibkeile 24 senkrecht nach unten. Die Federkraft der Federn 23 ist so bemessen, dass das Gesenk zunächst in seine untere Position zur Umformung der Platine 10 abgesenkt wird. Wie in der Fig. 4a dargestellt ist, werden beim weiteren Absenken der Kopfplatte 21 die Federn 23 zusammengedrückt und die Treibkeile 24 vollständig abgesenkt, wodurch die Schieber 25 zusammengeschoben werden (s. Fig. 5a, b). Bei diesem Vorgang stützen sich die Treibkeile 24 an den Rückenstützen 28 ab, die ortsfest auf der Grundplatte 22 angeordnet sind. Die Schieber 25 werden, wie in den Fign. 5a und 5b dargestellt ist, soweit beigeschoben, bis der Bund 11'' vollständig umgebogen ist.

In den Fign. 3b, 4b und 5b ist deutlich zu sehen, dass die Lagerschale 10' während dieses Umformvorganges über die Stege 4 und die in dieser Darstellung nicht dargestellten Bügel mit dem Rand 2 des Bandes 1 verbunden bleibt.

### Bezugszeichenliste

- 1: Band
- 2: Rand
- 3: Ausstanzung
- 4: Steg
- 5a,b: Bügel
- 6: Übergangsabschnitt
- 7: Positionierloch
- 9: Dehnungs- und Halteabschnitt
- 10: Platine
- 10': Lagerschale
- 11: Platinenrand
- 11': teilumgeformter Bund
- 11": Bund
- 20: Umformvorrichtung
- 21: Kopfplatte
- 22: Grundplatte
- 23: Feder
- 24: Treibkeil
- 25: Schieber
- 26: Formballen
- 27: Gesenk
- 28: Rückenstütze
- 29: Schräge
- 30: Schräge

## Patentansprüche

1. Verfahren zur Herstellung von Bundlagern, bei dem ein bandförmiges Trägermaterial mit Gleitschichtmaterial beschichtet wird, aus dem beschichteten Band (1) Platinen (10) ausgestanzt und die Platinen (10) zu Bundlagern umgeformt und endbearbeitet werden, **dadurch gekennzeichnet, dass** jede Platine (10) unter Ausbildung von mindestens zwei Dehnungs- und Halteabschnitten (9) ausgestanzt wird, über die die Platine (10) während der Umformung mit dem Rand der Bandes (1) verbunden bleibt, dass die Dehnungs- und Halteabschnitte (9) jeweils einen in Querrichtung verlaufenden Steg (4) und zwei in Querrichtung dehnbare Bügel (5a, 5b) aufweisen und dass nach Beendigung der Umformung das Bundlager an den Dehnungs- und Halteabschnitten (9) abgetrennt wird.

2. Verfahren nach Anspruch 1, **dadurch gekennzeichnet, dass** die Dehnungs- und Halteabschnitte (9) jeweils seitlich im Bereich des späteren Scheitels des Bundlagers ausgestanzt werden.

3. Verfahren nach Anspruch 1 oder 2, **dadurch gekennzeichnet, dass** die Dehnungs- und Halteabschnitte (9) in Platinenlängsrichtung unnachgiebig und in Platinenquerrichtung dehnbar ausgebildet sind.

4. Verfahren nach Anspruch 1 bis 3, **dadurch gekennzeichnet, dass** im Randbereich des Bandes (1) Positionierlöcher (7) ausgestanzt werden.

5. Verfahren nach Anspruch 1 bis 4, **dadurch gekennzeichnet, dass** die Umformung der Platine (10) in einem Gesenk durchgeführt wird.

6. Verfahren nach Anspruch 5, **dadurch gekennzeichnet, dass** zuerst die Lagerschale (10') hergestellt und anschließend der Rand der Lagerschale (10') zum Bund (11") umgebogen wird.

## Claims

1. Method for the production of collared bearings, in which a strip-shaped carrier material is coated with sliding-layer material, blanks (10) being punched out from the coated strip (1), and the blanks (10) being formed into collared bearings and being finally machined, **characterized in that** each blank (10) is punched out so as to form at least two expansion and holding portions (9), via which the blank (10) remains connected to the edge of the strip (1) during forming, **in that** the expansion and holding portions (9) each have a web (4) running in the transverse direction and two stays (5a, 5b) expandable in the transverse direction, and **in that**, after the end of forming, the collared bearing is detached at the expansion and holding portions (9).

2. Method according to Claim 1, **characterized in that** the expansion and holding portions (9) are in each case punched out laterally in the region of the subsequent vertex of the collared bearing.

3. Method according to Claim 1 or 2, **characterized in that** the expansion and holding portions (9) are designed to be inflexible in the blank longitudinal direction and expandable in the blank transverse direction.

4. Method according to Claims 1 to 3, **characterized in that** positioning holes (7) are punched out in the edge region of the strip (1).

5. Method according to Claim 1 to 4, **characterized in that** the forming of the blank (10) is carried out in a die.

6. Method according to Claim 5, **characterized in that**, first, the bearing shell (10') is produced, and, subsequently, the edge of the bearing shell (10') is bent round to form the collar (11'').

## Revendications

1. Procédé de fabrication de paliers à collerette, dans lequel un matériau de support en forme de bande est revêtu d'un matériau de couche de glissement, des flans (10) sont estampés dans la bande revêtue (1) et les flans (10) sont mis en forme et usinés pour former des paliers à collerette, **caractérisé en ce que** chaque flan (10) est estampé en formant au moins deux portions d'étirement et de retenue (9), par le biais desquelles le flan (10) reste connecté au bord de la bande (1) pendant l'opération de mise en forme, **en ce que** les portions d'étirement et de retenue (9) présentent chacune une nervure (4) s'étendant dans la direction transversale et deux étriers (5a, 5b) étirables dans la direction transversale, et **en ce qu'**à la fin de l'opération de mise en forme, le palier à collerette est détaché des portions d'étirement et de retenue (9).

2. Procédé selon la revendication 1, **caractérisé en ce que** les portions d'étirement et de retenue (9) sont chacune estampées latéralement dans la région du sommet subséquent du palier à collerette.

3. Procédé selon la revendication 1 ou 2, **caractérisé en ce que** les portions d'étirement et de retenue (9) sont réalisées de manière non flexible dans la direction longitudinale des flans et de manière étirable dans la direction transversale des flans.

4. Procédé selon l'une quelconque des revendications 1 à 3, **caractérisé en ce que** des trous de positionnement (7) sont estampés dans la région du bord de la bande (1).

5. Procédé selon l'une quelconque des revendications 1 à 4, **caractérisé en ce que** la mise en forme du flan (10) s'effectue dans une matrice.

6. Procédé selon la revendication 5, **caractérisé en ce que** l'on fabrique tout d'abord la coque de palier (10') et ensuite le bord de la coque de palier (10') est replié pour former la collerette (11").
